(19) **Europäisches Patentamt / European Patent Office / Office européen des brevets**

(11) **EP 4 714 989 A1**

(12) **EUROPEAN PATENT APPLICATION**
published in accordance with Art. 153(4) EPC

(43) Date of publication:
**25.03.2026   Bulletin 2026/13**

(21) Application number: **24807203.5**

(22) Date of filing: **14.05.2024**

(51) International Patent Classification (IPC):
**C08F 20/56** (2006.01)

(52) Cooperative Patent Classification (CPC):
**C08F 20/56**

(86) International application number:
**PCT/JP2024/017782**

(87) International publication number:
**WO 2024/237251 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.05.2023   JP 2023080192**

(71) Applicant: **Nippon Shokubai Co., Ltd.**
**Osaka-shi, Osaka 541-0043 (JP)**

(72) Inventors:
• **KAMATA, Shusuke**
  **Suita-shi, Osaka 564-0034 (JP)**
• **SAKAMOTO, Shigeru**
  **Himeji-shi, Hyogo 671-1282 (JP)**
• **AKIOKA, Ippei**
  **Himeji-shi, Hyogo 671-1282 (JP)**

(74) Representative: **Hoffmann Eitle**
**Patent- und Rechtsanwälte PartmbB**
**Arabellastraße 30**
**81925 München (DE)**

(54) **CROSS-LINKED POLYMER AND PRODUCTION METHOD FOR SAME**

(57)    Provided are: a cross-linked polymer with a low residual monomer content that is excellent in reducing discoloration after long-term storage or long-term use while maintaining excellent water absorbency and the like, and a method for producing the cross-linked polymer. The object is solved by a cross-linked polymer having a structural unit derived from acrylamide, the cross-linked polymer having: a content of transition metal other than iron of 40 ppb or less; Yellowness Index (YI) after an accelerated discoloration test of 60 or less; and a pure water retention capacity of 10 (g/g) or more.

## Description

Technical Field

The present invention relates to a cross-linked polymer and a method for producing the cross-linked polymer.

Background Art

Cross-linked polymers using acrylamide containing a trace amount of copper are known as a raw material for salt-resistant water-absorbent resins used in water blocking materials and the like.

For example, Patent Document 1 discloses a method for producing an acrylamide-based polymer by aqueous solution polymerization of an acrylamide-based monomer under basic conditions, wherein the polymerization is performed in the presence of 1 ppb to 100 ppb of copper ions relative to the acrylamide-based monomer.

Patent Document 2 discloses a method for producing a copolymer and the like by reverse-phase emulsion polymerization of a mixture of acrylic acid and/or its salt and acrylamide as monomers in the presence of any crosslinking agent without adding a transition metal compound. The reverse-phase emulsion polymerization is performed in the presence of a predetermined initiator pair containing an oxidizing agent and a reducing agent.

Patent Document 3 discloses a method for producing a polymer, the method including at least one gel polymerization step (E) of bringing a group of ethylenically unsaturated water-soluble monomers; a predetermined free radical source; and a radical polymerization control agent into contact with each other. Step (E) is performed at a concentration of the monomers in the reaction medium, the concentration sufficiently high to cause gelation in the medium if the polymerization is otherwise performed without the control agent. Patent Document 3 also discloses an aspect in which the reaction medium in step (E) does not contain copper.

Citation List

Patent Document

    Patent Document 1: JP S62-039604 A
    Patent Document 2: JP 2007-502879 T
    Patent Document 3: JP 2013-538913 T

Summary of Invention

Technical Problem

However, such known techniques as described above have room for improvement in terms of quality, including the retention of excellent water absorbency and the like, and the reduction of residual monomer content; and in terms of discoloration during long-term storage or use. In fact, no cross-linked polymers satisfying all of these requirements have been provided.

An object of one aspect of the present invention is to provide a cross-linked polymer that has a low monomer content after polymerization and is excellent in reducing discoloration after long-term storage or long-term use while maintaining excellent water absorbency and the like, and a method for producing the cross-linked polymer.

Solution to Problem

That is, an embodiment of the present invention includes the following configuration.

A cross-linked polymer including a structural unit derived from acrylamide, the cross-linked polymer having:

    a content of transition metal other than iron of 40 ppb or less;
    Yellowness Index (YI) after an accelerated discoloration test of 60 or less; and
    a pure water retention capacity of 10 (g/g) or more,
    wherein the accelerated discoloration test is performed by exposing the cross-linked polymer to an atmosphere at a temperature of $80 \pm 1°C$ and a relative humidity of $80 \pm 1\%$ for 11 days,
    Yellowness Index (YI) is a yellowness index specified in ASTM D1925 in Hunter Lab color space, and
    the pure water retention capacity, a value calculated by a formula (Formula 1) set forth below, is a fluid retention capacity when 0.05 g of the cross-linked polymer is freely swollen in deionized water for 120 minutes:

pure water retention capacity (g/g) = (weight (g) of the cross-linked polymer after free swelling - weight (g) of the cross-linked polymer before free swelling)/(weight (g) of the cross-linked polymer before free swelling (1).     (1).

In addition, another embodiment of the present invention includes the following configuration.

A method for producing a cross-linked polymer, the method including a step of polymerizing a monomer containing acrylamide having a content of transition metal other than iron of 40 ppb or less with a crosslinking agent to obtain a cross-linked polymer,

the cross-linked polymer having a pure water retention capacity of 10 (g/g) or more,
wherein the pure water retention capacity, a value calculated by a formula (Formula 1) set forth below, is a fluid retention capacity when 0.05 g of the cross-linked polymer is freely swollen in deionized water for 120 minutes:

pure water retention capacity (g/g) = (weight (g) of the cross-linked polymer after free swelling - weight (g) of the cross-linked polymer before free swelling)/(weight (g) of the cross-linked polymer before free swelling (1).     (1).

Advantageous Effects of Invention

An aspect of the present invention can provide the cross-linked polymer that has a low residual monomer content and is excellent in reducing discoloration after long-term storage or long-term use while maintaining excellent water absorbency and the like, and the method for producing the cross-linked polymer.

Description of Embodiments

Hereinafter, the present invention will be described with reference to the best embodiment. It should be understood that the terms used herein have the meanings commonly used in the art, unless otherwise specified. Thus, unless defined otherwise, all technical and scientific terms used herein have the same meanings as commonly understood by those skilled in the art to which the present invention belongs. If there is any conflict, the present specification (including definitions) will prevail. The present invention is not limited to the following embodiments, and can be variously modified within the scope of the claims.

1. Definition of Terms

(1-1) Cross-Linked Polymer

As used herein, the term "cross-linked polymer" is intended to mean a water-swellable water-insoluble cross-linked polymer. In addition, as used herein, the term "water-swellable" means that a pure water retention capacity specified herein is 5 (g/g) or more, and "water-insoluble" means that a soluble content specified herein is 50 mass% or less.

The cross-linked polymer can be appropriately designed according to its applications and is not particularly limited, but is a hydrophilic cross-linked polymer having a structural unit derived from acrylamide. The hydrophilic cross-linked polymer is preferably a hydrophilic cross-linked polymer obtained by cross-linking polymerization of acrylamide, or a hydrophilic cross-linked polymer obtained by cross-linking polymerization of acrylamide and an unsaturated monomer having a carboxyl group. In addition, the hydrophilic cross-linked polymer is not limited to a form in which the entire amount (100 mass%) is a polymer, and may be a surface-cross-linked hydrophilic polymer and/or a composition containing an additive and/or the like within a range maintaining the performance.

(1-2) Others

As used herein, "X to Y" indicating a range means "X or more and Y or less". As used herein, "weight" and "mass", "wt.%" and "mass%", and "parts by weight" and "parts by mass" are treated as synonyms. As used herein, "ppm" means "mass ppm" and "ppb" means "mass ppb", unless otherwise specified. As used herein, "... acid (salt)" means "... acid and/or its salt", and "(meth)acryl" means "acryl and/or methacryl". As used herein, "liter", a unit of volume, may be denoted by "l" or "L".

## 2. Cross-Linked Polymer

A cross-linked polymer according to an embodiment of the present invention (which may hereinafter be referred to as "the present cross-linked polymer") is a cross-linked polymer containing a structural unit derived from acrylamide, the cross-linked polymer having:

a content of transition metal other than iron of 40 ppb or less;
Yellowness Index (YI) after an accelerated discoloration test of 60 or less; and
a pure water retention capacity of 10 (g/g) or more,
wherein the accelerated discoloration test is performed by exposing the cross-linked polymer to an atmosphere at a temperature of 80 ± 1°C and a relative humidity of 80 ± 1% for 11 days,
Yellowness Index (YI) is a yellowness index specified in ASTM D1925 in Hunter Lab color space, and
the pure water retention capacity, a value calculated by a formula (Formula 1) set forth below, is a fluid retention capacity when 0.05 g of the cross-linked polymer is freely swollen in deionized water for 120 minutes: pure water retention capacity (g/g) = (weight (g) of the cross-linked polymer after free swelling - weight (g) of the cross-linked polymer before free swelling)/(weight (g) of the cross-linked polymer before free swelling (1).

(2-1) Cross-Linked Polymer Having Structural Unit Derived from Acrylamide and Content of Transition Metal other than Iron

The present inventors have found that setting the content of transition metal other than iron to 40 ppb or less in the present cross-linked polymer can provide a cross-linked polymer having: excellent water-absorption performance, reduced discoloration after long-term storage or long-term use, and a decreased residual monomer content.

As used herein, the term "structural unit derived from acrylamide" is a structural unit represented by $-CH_2CH(CONH_2)-$.

In addition, as used herein, the term "cross-linked polymer having a structural unit derived from acrylamide" means a polymer having a structural unit derived from acrylamide and having a structure in which the structural unit is cross-linked.

From the viewpoint of salt resistance, the content of a structural unit derived from acrylamide in the cross-linked polymer is preferably 50 mol% or more, more preferably 55 mol% or more, and even more preferably 60 mol% or more relative to all structural units (100 mol%) excluding a structure derived from an internal crosslinking agent in the cross-linked polymer. In addition, from the viewpoint of the pure water retention capacity, the content is preferably 95 mol% or less, more preferably 90 mol% or less, and even more preferably 75 mol% or less relative to all the structural units.

The content of transition metal other than iron in the cross-linked polymer is 40 ppb or less, preferably 30 ppb or less, more preferably 25 ppb or less, and even more preferably 20 ppb or less (the lower limit is 0 ppb). Setting the content of transition metal other than iron contained in the cross-linked polymer within the above range can reduce discoloration of the cross-linked polymer after long-term storage or long-term use and maintain the whiteness for a long period.

In the present specification, the content of transition metal other than iron can be measured, for example, by ICP emission spectrometry as described in Examples described below.

The transition metal other than iron is one or more elements of each of groups 3 to 11 of the periodic table. Examples of the transition metal include chromium, manganese, cobalt, nickel, and copper. Among these, in view of the significant effect on discoloration of the present cross-linked polymer after long-term storage or long-term use and the residual monomer content, the transition metal other than iron is preferably copper.

As described above, to set the content of the transition metal other than iron in the cross-linked polymer to 40 ppb or less, the content of the transition metal other than iron in the acrylamide, a raw material monomer for the cross-linked polymer, is preferably 40 ppb or less. In addition, the content is more preferably 10 ppb or less, even more preferably 5 ppb or less, particularly preferably 3 ppb or less, and most preferably less than 1 ppb (the lower limit is 0 ppb). Setting the content of the transition metal other than iron contained in the acrylamide to the above range can reduce the content (residual monomer) of the acrylamide and other monomers (mainly acrylic acid or its salt) remaining in the cross-linked polymer and provide a cross-linked polymer having an excellent safety profile.

The transition metal other than iron contained in the acrylamide is the same as the transition metal other than iron contained in the cross-linked polymer described above, and is preferably copper. Note that acrylamide to be used as a monomer is distributed in the form of a solid (powder) or an aqueous solution of several tens of mass%; however, the content of the transition metal other than iron in the acrylamide described above is preferably the above content relative to the solids content of acrylamide.

The cross-linked polymer having a structural unit derived from acrylamide may be a cross-linked (co)polymer obtained by copolymerizing acrylamide and a monomer other than acrylamide and cross-linking the resultant. As the monomer, for example, an unsaturated monomer having a carboxy group is suitably selected. Among the unsaturated monomers having a carboxy group, acrylic acid and/or an acrylate is preferred from the viewpoint of productivity. That is, the present cross-linked polymer is preferably a cross-linked copolymer having structural units derived from acrylamide and acrylic acid and/or an acrylate. As used herein, "a structural unit derived from acrylic acid" is -$CH_2CH(COOH)$-, and "a structural unit derived from an acrylate" is - $CH_2CH(COOM)$- (e.g., M is a cation of an alkali metal or the like).

From the viewpoint of the pure water retention capacity, the content of the structural unit derived from acrylic acid and/or an acrylate in the cross-linked polymer is preferably 5 mol% or more, more preferably 10 mol% or more, and even more preferably 20 mol% or more relative to all structural units (100 mol%) excluding a structure derived from an internal crosslinking agent in the cross-linked polymer. In addition, from the viewpoint of salt resistance, the content is preferably 50 mol% or less, more preferably 45 mol% or less, and even more preferably 40 mol% or less relative to all the structural units.

The "acrylic acid" is not particularly limited, and a known acrylic acid is used. The known acrylic acid is obtained, for example, by obtaining gaseous acrylic acid by a catalytic gas-phase oxidation method, collecting the resulting gaseous acrylic acid with a solvent, such as water, and then purifying it by distillation, crystallization, and/or the like. The acrylic acid may contain a trace amount of a component, such as a polymerization inhibitor and/or an impurity.

As the "acrylate", a product obtained by neutralizing the acrylic acid described above with a basic compound described below is used; however, the acrylate may be a commercially available acrylate (e.g., sodium acrylate) or may be obtained by neutralizing acrylic acid in a production plant for the cross-linked polymer. Alternatively, the acrylate may be obtained by neutralizing some or all of the structural unit derived from acrylic acids in the cross-linked polymer after obtaining the cross-linked polymer.

The monomer other than acrylamide is not limited to the above-described monomer, and another hydrophilic or hydrophobic unsaturated monomer can also be used. Examples of the unsaturated monomer include one or more monomers selected from the group consisting of methacrylic acid, maleic acid (or maleic anhydride), 2-(meth)acrylamide-2-methylpropanesulfonic acid, (meth)acryloxyalkanesulfonic acid, N-vinyl-2-pyrrolidone, N-vinylacetamide, methacrylamide, N-isopropyl(meth)acrylamide, N,N-dimethyl(meth)acrylamide, 2-hydroxyethyl (meth)acrylate, methoxypolyethylene glycol (meth)acrylate, polyethylene glycol (meth)acrylate, stearyl acrylate, and their salts.

Also, for the monomer other than acrylamide and the crosslinking agent, the content of the transition metal other than iron is preferably 40 ppb or less, more preferably 10 ppb or less, even more preferably 5 ppb or less, particularly preferably 3 ppb or less, and most preferably less than 1 ppb (the lower limit is 0 ppb).

The content of acrylamide in the monomer used in the production of the cross-linked polymer is preferably 40 mass% or more, more preferably 50 mass% or more, and even more preferably 60 mass% or more relative to the total monomer used in the polymerization. In addition, the content is preferably 90 mass% or less, more preferably 80 mass% or less, and even more preferably 70 mass% or less relative to the total monomer used in the polymerization. Note that the monomer does not include a crosslinking agent.

The content of acrylic acid and/or an acrylate in the monomer is preferably 10 mass% or more, more preferably 20 mass% or more, and even more preferably 30 mass% or more relative to the total monomer used in the polymerization. In addition, the content is preferably 60 mass% or less, more preferably 50 mass% or less, and even more preferably 40 mass% or less relative to the total monomer used in the polymerization.

The content of a monomer other than acrylamide, acrylic acid and/or an acrylate in the monomer is preferably 10 mass% or more, more preferably 20 mass% or more, and even more preferably 30 mass% or more relative to the total monomer used in the polymerization. In addition, the content is preferably 90 mass% or less, more preferably 80 mass% or less, and even more preferably 70 mass% relative to the total monomer used in the polymerization.

However, the sum of the mass% of acrylamide; acrylic acid and/or an acrylate; and a monomer other than acrylamide, acrylic acid and an acrylate, in the monomers used in the production of the cross-linked polymer, does not exceed 100 mass%.

As described later, the cross-linked polymer is preferably obtained by cross-linking polymerization of an internal crosslinking agent with acrylamide and, if necessary, a monomer other than acrylamide. That is, the cross-linked polymer preferably has a cross-linked structure derived from an internal crosslinking agent described later. As an internal crosslinking agent, an internal crosslinking agent exemplified in "4. Method for Producing Cross-Linked Polymer" can be suitably used.

(2-2) Yellowness Index (YI) of Present Cross-Linked Polymer after Accelerated Discoloration Test

The present cross-linked polymer has Yellowness Index (YI) after an accelerated discoloration test of 60 or less. The present cross-linked polymer has this configuration and thus is excellent in reducing discoloration during long-term storage or long-term use. The reduction of discoloration is a property necessary for improving the appearance of a water blocking material, such as a water blocking tape containing the present cross-linked polymer.

The cross-linked polymer is colorless or nearly transparent. Yellowness Index (YI) after the accelerated discoloration test is a parameter indicating the degree of change in hue toward the yellow direction after the accelerated discoloration test is performed on the present cross-linked polymer. A smaller value of Yellowness Index means a lower degree of discoloration and a color closer to white. As used herein, Yellowness Index (YI) is a yellowness index specified in ASTM D1925 in Hunter Lab color space.

The accelerated discoloration test is performed by exposing the cross-linked polymer to an atmosphere at a temperature of $80 \pm 1°C$ and a relative humidity of $80 \pm 1\%$ for 11 days. For example, the accelerated discoloration test can be performed according to the following method shown in Examples described later.

- A powder/paste sample holder with an inner diameter of 30 mm and a height of 12 mm is uniformly filled with 1.5 g of the cross-linked polymer so as not to leave a gap on the bottom surface.
- Then, the sample holder is exposed for 11 days in a constant temperature and humidity chamber (available from Espec Corp. under a product name of Small Environment Tester, type SH-642) adjusted to an atmosphere of $80 \pm 1°C$ and a relative humidity of $80 \pm 1\%$.
- Subsequently, the sample holder is taken out from the constant temperature and humidity chamber, and Yellowness Index (YI, ASTM D1925) in Hunter Lab color space is measured from the back surface of the sample holder using a spectrophotometric colorimeter SE7700 (available from Nippon Denshoku Industries Co., Ltd.). The sample is measured under conditions using a standard C light source with a 2-degree field of view.

Yellowness Index (YI) after the accelerated discoloration test is 60 or less, preferably 55 or less, and more preferably 50 or less (the lower limit is 0). With Yellowness Index (YI) after the accelerated discoloration test of 60 or less, the present cross-linked polymer has an advantage of minimal change in hue toward the yellow direction after a long period and is excellent in reducing discoloration.

Furthermore, in the present cross-linked polymer, the whiteness (WB) based on blue reflectance in the XYZ color system after the accelerated discoloration test is preferably 25 or more, more preferably 27 or more, and even more preferably 30 or more (the upper limit is 100). A larger value of the WB means a lower degree of discoloration and a color closer to white.

With the WB of 25 or more, the present cross-linked polymer has an advantage of high luminance after a long period of time and is excellent in reducing discoloration. The WB can also be measured using the spectrophotometric colorimeter in the same manner as the YI.

(2-3) Pure Water Retention Capacity of Present Cross-Linked Polymer

The present cross-linked polymer has a pure water retention capacity of 10 (g/g) or more. The present cross-linked polymer has the configuration and thus has sufficient water absorbency. Thus, the present cross-linked polymer can be suitably used as a component of a water blocking material.

The pure water retention capacity, a value calculated by a formula (Formula 1) set forth below, is a fluid retention capacity when 0.05 g of the cross-linked polymer is freely swollen in deionized water for 120 minutes: pure water retention capacity (g/g) = (weight (g) of the cross-linked polymer after free swelling - weight (g) of the cross-linked polymer before free swelling)/(weight (g) of the cross-linked polymer before free swelling) (1).

In detail, the method for measuring the pure water retention capacity is as follows.

- In a nonwoven bag (85 mm in width $\times$ 60 mm in length), 0.050 g of the cross-linked polymer is placed, and the entire nonwoven bag is submerged in deionized water (conductivity of 1.0 mS/cm or less). The amount of the deionized water is preferably a large excess relative to the cross-linked polymer.
- After the cross-linked polymer is immersed (freely swollen) in the deionized water for 120 minutes, the nonwoven fabric bag containing the water-absorbed gel is slowly pulled up from the liquid and drained for 20 seconds, and then the weight is measured.
- The weight of a nonwoven fabric alone without containing the cross-linked polymer is measured in the same manner and is used as a blank, and the pure water retention capacity is calculated according to the following formula. Note that the following formula (Formula 2) is the same as the formula described above (Formula 1):

pure water retention capacity (g/g) = (weight (g) of nonwoven fabric bag containing water-absorbed gel - weight (0.050 g) of cross-linked polymer - blank (g))/weight (0.050 g) of cross-linked polymer (2).     (2).

The pure water retention capacity is preferably 20 (g/g) or more, more preferably 30 (g/g) or more, even more preferably 40 (g/g) or more, and particularly preferably 50 (g/g) or more. The upper limit of the pure water retention capacity is not particularly limited and is typically 1000 (g/g) or less, preferably 500 (g/g) or less, and more preferably 250 (g/g) or less.

As described above, the present cross-linked polymer has a configuration in which the content of transition metal other than iron is 40 ppb or less, Yellowness Index (YI) after the accelerated discoloration test is 60 or less, and the pure water retention capacity is 10 (g/g) or more. Setting the content of transition metal other than iron to 40 ppb or less can reduce Yellowness Index and increase the pure water retention capacity. This is a finding first discovered by the invention of the present application. Having the above configuration, the present cross-linked polymer is excellent in reducing discoloration after long-term storage or long-term use and has sufficient water absorbency. That allows the present cross-linked polymer to have excellent appearance even after long-term storage or long-term use and to exhibit sufficient water absorption properties when it is used as a water blocking material, such as a water blocking tape.

In the course of examining the physical properties of the present cross-linked polymer, the present inventors have further found that the residual monomer content of the present cross-linked polymer is very low. Thus, the physical properties of the present cross-linked polymer, other than its discoloration and water absorbency, such as its residual monomer content, will be described below.

(2-4) Other Physical Properties of The Present Cross-Linked Polymer

(2-4-1) Degree of Neutralization of Acidic Functional Group in Cross-Linked Polymer

From the viewpoints of improving the water-absorption performance and decreasing the residual monomer content, the present cross-linked polymer preferably has a degree of neutralization of its acidic functional groups of 10 mol% or more relative to the acidic functional groups. That is, in the present cross-linked polymer, 10 mol% or more of the acidic functional groups contained in the monomer are preferably neutralized to form a partially neutralized salt. Examples of the acidic functional group include acidic functional groups, such as a carboxyl group, contained in acrylic acid and the monomer other than acrylamide described above.

The degree of neutralization is more preferably 20 mol% or more, even more preferably 30 mol% or more, and from the viewpoint of the pure water retention capacity, the ratio is particularly preferably 40 mol% or more. The upper limit of the degree of neutralization of the acidic functional group is not particularly limited.

The partially neutralized salt is not particularly limited, but from the viewpoint of water-absorption performance, it is preferably a monovalent salt selected from alkali metal salts, ammonium salts, and amine salts. In addition, the partially neutralized salt is more preferably an alkali metal salt, even more preferably an alkali metal salt selected from sodium salts, lithium salts, and potassium salts, and particularly preferably a sodium salt. Thus, the basic substance used for the neutralization is not particularly limited but is preferably a monovalent basic substance, such as an alkali metal hydroxide (e.g., sodium hydroxide, potassium hydroxide, or lithium hydroxide) or a (hydrogen) carbonate (e.g., sodium (hydrogen) carbonate or potassium (hydrogen) carbonate), and particularly preferably sodium hydroxide.

Note that the neutralization can be performed before, during, or after the polymerization but is more preferably performed on acrylic acid before the polymerization. The neutralization can be performed using a "basic compound". Specific examples of the basic compound include alkali metal carbonates, alkali metal hydrogen carbonates, alkali metal hydroxides, ammonia, and organic amines. Among these, from the viewpoint of the physical properties of the resulting cross-linked polymer, a compound exhibiting strong basicity is preferably selected as the basic compound. That is, as the basic compound, a hydroxide of an alkali metal, such as sodium, potassium, or lithium, is more preferably used, and sodium hydroxide is even more preferably used. Note that from the viewpoint of handling properties, the basic compound is preferably formed into an aqueous solution.

(2-4-2) Extractable Content of The Present Cross-Linked Polymer

The present cross-linked polymer has an extractable content of 50 mass% or less. The present cross-linked polymer has the configuration and thus has sufficient shape retention. Thus, the present cross-linked polymer can be suitably used as a component of a water blocking material. The extractable content can be measured by the method described in Examples below. The extractable content of the present cross-linked polymer is preferably 40 mass% or less, more preferably 30 mass% or less, and even more preferably 20 mass% or less. The lower limit of the extractable content is 0.1 mass% or more.

(2-4-3) Acrylamide Content in The Present Cross-Linked Polymer

The content of acrylamide in the present cross-linked polymer is preferably 500 ppm or less. As described above, the present inventors have found that setting the content of transition metal other than iron in the present cross-linked polymer to 40 ppb or less can reduce Yellowness Index and increase the pure water retention capacity. Along with that, the present inventors have also found that the content of the monomer remaining in the present cross-linked polymer (residual monomer) is very low. There has been no knowledge about the correlation between the content of transition metal other than iron and the content of the residual monomer. Thus, the effect of the very low residual monomer content in the present cross-linked polymer is an effect that cannot be predicted from techniques known in the art even by those skilled in the art. In addition, there has been no cross-linked polymer like the present cross-linked polymer that can maintain a high pure water retention capacity and reduce Yellowness Index and the residual monomer content.

From the viewpoint of safety, the content of acrylamide in the present cross-linked polymer is preferably 500 ppm or less, more preferably 300 ppm or less, even more preferably 200 ppm or less, still more preferably 100 ppm or less, particularly preferably 50 ppm or less, and most preferably 30 ppm or less. The lower limit of the content is not particularly limited.

(2-4-4) Content of Acrylic Acid and/or Acrylate in The Present Cross-Linked Polymer

When the monomer further contains acrylic acid and/or an acrylate, the present cross-linked polymer preferably contains 500 ppm or less of the acrylic acid and/or acrylate. The acrylic acid and/or acrylate is the residual monomer described above.

Setting the content of acrylic acid and/or an acrylate in the present cross-linked polymer to 500 ppm or less from the viewpoint of safety can significantly reduce the adverse effect of the acrylic acid and/or acrylate on the physical properties of the cross-linked polymer. From such a viewpoint, the content of acrylic acid and/or an acrylate in the present cross-linked polymer is more preferably 450 ppm or less, particularly preferably 400 ppm or less, and most preferably 350 ppm or less. The lower limit of the content is not particularly limited.

(2-4-5) Surface Tension of The Present Cross-Linked Polymer

The present cross-linked polymer preferably has a surface tension value of 60 mN/m or more. The present cross-linked polymer with the configuration can further reduce the return amount when used in a water blocking material or the like. From such a viewpoint, the surface tension value is more preferably 65 mN/m or more, even more preferably 70 mN/m or more, and still more preferably 72 mN/m or more. The upper limit of 75 mN/m is typically sufficient.

Surface tension is the per-unit-area amount of work (free energy) required to increase the surface area of a solid and/or liquid. The surface tension as used herein refers to the surface tension of an aqueous solution when the cross-linked polymer is dispersed in a 0.90 mass% sodium chloride aqueous solution.

The method for measuring the surface tension of the present cross-linked polymer is as follows. Into a thoroughly washed 100-mL beaker, 50 mL of saline adjusted to 20°C is added. First, the surface tension of the saline is measured using a surface tensiometer (K11 Automatic Surface Tensiometer available from KRUSS GmbH) to confirm the value is from 71 to 75 (mN/m). Next, a thoroughly washed 25-mm long fluororesin stirring bar and 0.5 g of the cross-linked polymer are placed in a beaker containing the saline adjusted to 20°C after the surface tension measurement, and the mixture was stirred at 500 rpm for 4 minutes. After 4 minutes, the stirring is stopped, and after the swelling cross-linked polymer has settled, the surface tension of the supernatant is measured by performing the same operation again. Note that in an embodiment of the present invention, a plate method using a platinum plate is employed, and before each measurement, the plate is thoroughly washed with deionized water and heat-cleaned with a gas burner for use.

(2-4-6) Fluid Retention Capacity of 3.5 Mass% NaCl Aqueous Solution of The Present Cross-Linked Polymer

The present cross-linked polymer preferably has a fluid retention capacity of 10 (g/g) or more in a 3.5 mass% NaCl aqueous solution, more preferably 15 (g/g) or more, and even more preferably 20 (g/g) or more. The present cross-linked polymer has the configuration and thus has sufficient water absorbency.

Note that the fluid retention capacity of a 3.5 mass% NaCl aqueous solution can be measured by changing the amount of the cross-linked polymer to be used from 0.050 g to 0.200 g and changing deionized water to a 3.5 mass% NaCl aqueous solution in the method for measuring the pure water retention capacity described above.

3. Water Blocking Material

A water blocking material according to an embodiment of the present invention contains the present cross-linked polymer described above. The water blocking material may be composed only of the present cross-linked polymer, or the present cross-linked polymer and an additional component may be mixed in any ratio and used as long as its performance is not impaired. Examples of the additional component include one or more components selected from the group consisting of binders, inorganic or organic fine particles, fibrous substances, surfactants, solvents, and the like.

As described above, the present cross-linked polymer has a low monomer content after polymerization and is excellent in reducing discoloration after long-term storage or long-term use while maintaining excellent water absorbency and the like. Thus, the water blocking material can exhibit these characteristics and thus can be said to be a water blocking material with excellent performance and appearance.

4. Applications

The cross-linked polymer of the present invention has excellent water absorbency and the like, and thus is used in applications intended for water-absorption and is widely used as an absorbent body. In addition, it is used as an absorbent article containing the absorbent body. The cross-linked polymer of the present invention is suitably used as an absorbent body suitable for hygiene articles for absorbing body fluids, such as urine and blood. In addition, the cross-linked polymer is also suitably used as an absorbent body suitable for absorbent articles to be disposed on a certain object (e.g., a floor, a bed sheet, etc.) for absorbing body fluids, such as urine and blood of a human or animal. Specific examples include disposable diapers, incontinence pads, sanitary napkins, pet sheets, waterproof sheets for nursing care, and emergency portable toilets. Examples of other absorbent articles include cat sand, drip absorbers, freshness retaining materials, and dew condensation prevention sheets.

Examples of applications other than the above include soil water-retaining agents, seedling raising sheets, seed coating materials, disposable body warmers, cooling bandanas, cold packs, medical waste liquid solidifying agents, surplus soil solidifying agents, waste liquid gelling agents for water damage prevention, water-absorbing sandbags, poultice materials, thickeners for cosmetics, water blocking materials for electrical/electronic material communication cables, gaskets and packings, sustained-release agents for fertilizers, various sustained-release agents (such as space disinfectants and fragrances), dressing materials for wound protection, building materials for dew condensation prevention, agents for removing moisture from oil, food packaging materials, sealing materials, contact lenses, implant materials, medical materials, agricultural films, antifogging agents, tires, automotive materials, ventilation filters, heat-retaining materials, antibacterial/insecticidal materials, fire-extinguishing agents, drying agents, humidity-conditioning materials, food (juice) waste liquid solidifying agents, thickeners, water treatment agents, cosmetics, heat storage materials, building materials, lubricants, cutting lubricants, and pore forming materials. In addition, the cross-linked polymer of the present invention can also be used in applications where it is water-absorbed and swollen, and mixed into a resin and/or a substrate. In such applications, the cross-linked polymer of the present invention is used as a paint; an adhesive; an antiblocking agent; a light-diffusing agent; a matting agent; an additive for decorative laminates; an additive for artificial marble; an additive for toner; a cement/concrete additive; an additive for latent hydraulic materials, such as geopolymers, fly ash, and blast furnace slag; an additive for various hydraulic cements, such as blast furnace slag cement, fly ash cement, LC3 cement (limestone calcined clay cement), Portland limestone cement, and Portland cement; an additive for various concretes, such as 3D concrete printing, sprayed concrete, and precast concrete; a pharmaceutical carrier, a topical ointment, or the like.

4. Method for Producing The Cross-Linked Polymer

A method for producing a cross-linked polymer according to an embodiment of the present invention (which may hereinafter be referred to as "the present production method") is a method for producing a cross-linked polymer, the method including a step of polymerizing a monomer containing acrylamide having a content of transition metal other than iron of 40 ppb or less with a crosslinking agent to obtain a cross-linked polymer,

the cross-linked polymer having a pure water retention capacity of 10 (g/g) or more,
wherein the pure water retention capacity, a value calculated by a formula (Formula 1) set forth below, is a fluid retention capacity when 0.05 g of the cross-linked polymer is freely swollen in deionized water for 120 minutes:

pure water retention capacity (g/g) = (weight (g) of the cross-linked polymer after free swelling - weight (g) of the cross-linked polymer before free swelling)/(weight (g) of the cross-linked polymer before free swelling (1).          (1).

Form of Polymerization

The polymerization may be performed in the absence of a solvent or may be performed using a solvent. The polymerization may be performed by any of various methods known in the art, such as, for example, a bulk polymerization method, a solution polymerization method, a suspension polymerization method, a reversed-phase suspension polymerization method, an emulsion polymerization method, a reversed-phase emulsion polymerization method, a precipitation polymerization method or a cast polymerization method, a thin-film polymerization method, or a spray polymerization method. The polymerization method is preferably a solution polymerization method and more preferably an aqueous solution polymerization.

That is, the polymerization step is preferably performed as aqueous solution polymerization using an aqueous monomer solution. In addition, in an embodiment of the present invention, continuous aqueous solution polymerization may be performed. Specific examples of the continuous aqueous solution polymerization include continuous belt polymerization described in US Patent 4,893,999 and the like and continuous kneader polymerization described in US Patent 6,987,151 and the like. The continuous aqueous solution polymerization enables production of the cross-linked polymer with high productivity.

In addition, examples of the form of the aqueous solution polymerization in an embodiment of the present invention include "high-temperature initiation polymerization", "high-concentration polymerization", and "foaming polymerization". Each of these forms of polymerization can be performed alone, or two or more can be used in combination. Note that as used herein, "high-temperature initiation polymerization" refers to a form of polymerization in which the temperature of an aqueous monomer solution when the polymerization is initiated is preferably set to 30°C or higher, more preferably 35°C or higher, even more preferably 40°C or higher, and particularly preferably 50°C or higher (the upper limit is the boiling point of the aqueous monomer solution). As used herein, "high-concentration polymerization" refers to a form of polymerization in which the concentration of an aqueous monomer solution when the polymerization is initiated is preferably set to 30 mass% or more, more preferably 35 mass% or more, even more preferably 40 mass% or more, and particularly preferably 45 mass% or more (the upper limit is saturation concentration). As used herein, "foaming polymerization" refers to a form of polymerization with bubbles (in particular, inert gas described below) dispersed in an aqueous monomer solution.

Each of the above-described forms of polymerization can also be performed in an air atmosphere. However, from the viewpoint of preventing discoloration of the resulting cross-linked polymer, it is preferably performed in an atmosphere of an inert gas, such as nitrogen or argon (e.g., the oxygen concentration is 1 vol.% or less). Note that dissolved oxygen in an aqueous monomer solution is also preferably thoroughly purged with an inert gas (e.g., to a dissolved oxygen content of less than 1 mg/L) in advance.

Hereinafter, the method for producing the present cross-linked polymer will be described in detail with reference to an example, but the method for producing the present cross-linked polymer is not limited to this.

(i) Preparation Step of Aqueous Monomer Solution

The present step is a step of preparing an aqueous monomer solution. The aqueous monomer solution can be prepared, for example, by dissolving the monomer and an internal crosslinking agent in water.

Monomer

The cross-linked polymer uses a monomer containing acrylamide as a monomer, the acrylamide containing 40 ppb or less of transition metal other than iron. The monomer is as described in "(2-1) Cross-Linked Polymer Having Structural Unit Derived from Acrylamide and Content of Transition Metal other than Iron" in "2. Cross-Linked Polymer" described above.

(ii) Polymerization Step

The method for polymerizing the monomer containing acrylamide and the crosslinking agent preferably employed is a method in which the internal crosslinking agent is added in advance to the aqueous monomer solution obtained in "(i) Preparation Step of Aqueous Monomer Solution" described above, and the monomer and the internal crosslinking agent are cross-linked simultaneously with the polymerization reaction (cross-linking polymerization). However, the method is not limited to such a technique, and a method may be employed, in which the monomer is polymerized without adding the internal crosslinking agent, and the internal crosslinking agent is added during or after the polymerization to perform cross-linking. As a result of the polymerization step, a cross-linked hydrogel copolymer (which may hereinafter be referred to as "hydrogel") is obtained.

Internal Crosslinking Agent

As the crosslinking agent (internal crosslinking agent) used in an embodiment of the present invention, an internal crosslinking agent described in US Patent 6,241,928 and the like can be applied.

Specific examples include N,N'-methylenebis(meth)acrylamide, (poly)ethylene glycol di(meth)acrylate, (poly)propylene glycol di(meth)acrylate, trimethylolpropane tri(meth)acrylate, glycerin tri(meth)acrylate, glycerin acrylate methacrylate, ethylene oxide-modified trimethylolpropane tri(meth)acrylate, pentaerythritol hexa(meth)acrylate, triallyl cyanurate, triallyl isocyanurate, triallyl phosphate, triallylamine, poly(meth)allyloxyalkanes, (poly)ethylene glycol diglycidyl ether, glycerol diglycidyl ether, ethylene glycol, polyethylene glycol, propylene glycol, glycerin, 1,4-butanediol, pentaerythritol, ethylenediamine, ethylene carbonate, propylene carbonate, polyethyleneimine, and glycidyl (meth)acrylate. From these, one or more internal crosslinking agents are selected in view of reactivity.

The amount of the internal crosslinking agent to be used is preferably from 0.001 mol% to 10 mol%, more preferably from 0.01 mol% to 1 mol%, and even more preferably from 0.10 mol% to 0.50 mol% relative to the total monomer. Using the internal crosslinking agent in an amount within the above range reduces the water-soluble content along with increased gel strength and provides a cross-linked polymer for which an increased fluid retention capacity and increased handling properties after liquid absorption are observed, which is thus preferred. Note that, for example, "the amount of the internal crosslinking agent to be used is 0.01 mol% relative to the total monomer" means that the value obtained by dividing the number of moles of the internal crosslinking agent by the number of moles of the total monomer and multiplying the resulting value by 100 is 0.01.

Polymerization Initiator

Examples of the polymerization initiator used in the present step include thermally decomposable polymerization initiators, photodecomposable polymerization initiators, or redox-based polymerization initiators that use a reducing agent in combination to accelerate the decomposition of these polymerization initiators.

Examples of the photodecomposable polymerization initiator include benzoin derivatives, benzyl derivatives, acetophenone derivatives, benzophenone derivatives, and azo compounds. In addition, examples of the thermally decomposable polymerization initiator include persulfate salts, such as sodium persulfate, potassium persulfate, and ammonium persulfate; peroxides, such as hydrogen peroxide, t-butyl peroxide, and methyl ethyl ketone peroxide; and azo compounds, such as 2,2'-azobis(2-amidinopropane) dihydrochloride and 2,2'-azobis[2-(2-imidazolin-2-yl)propane] dihydrochloride. Furthermore, examples of the redox-based polymerization initiator include systems in which a reducing compound, such as L-ascorbic acid or sodium hydrogen sulfite is used in combination with the persulfate salt or peroxide. Moreover, a form in which the photodecomposable polymerization initiator and the thermally decomposable polymerization initiator are used in combination is also preferred.

The amount of the polymerization initiator to be used is preferably from 0.0001 mol% to 1 mol% and more preferably from 0.0005 mol% to 0.5 mol% relative to the total monomer. Using the polymerization initiator in an amount of 1 mol% or less can prevent or reduce deterioration of the color tone of the water-absorbing resin, which is thus preferred. In addition, using the polymerization initiator in an amount of 0.0001 mol% or more can prevent or reduce an increase in the residual monomer, which is thus preferred. Note that merely using the polymerization initiator in an amount of 0.0001 mol% or more does not provide the low residual monomer content in the present cross-linked polymer.

The pH of the aqueous solution (aqueous monomer solution) is preferably from 6 to 12, more preferably from 7 to 11, even more preferably from 7.5 to 10.5, and particularly preferably from 8 to 10.

The polymerization step is preferably performed while the cross-linked polymer and/or its precursor obtained during polymerization is being crushed. For example, when kneader polymerization, such as the continuous kneader polymerization described above, is performed, the polymerization step and the crushing (gel-crushing step) of the cross-linked polymer and/or its precursor are simultaneously performed.

The gel-crushing step is a step of crushing (gel-crushing) the cross-linked polymer obtained in the polymerization step to obtain a particulate hydrogel (hereinafter referred to as "particulate hydrogel"). The "gel-crushing" means forming the cross-linked polymer into particulate form using a gel crusher, such as a kneader, a meat chopper, or a cutter mill. For the embodiment, conditions, and the like of the gel-crushing, for example, the contents described in WO 2011/126079 and the like are applied to an embodiment of the present invention.

However, the present production method is not limited to this and may include a step of crushing the cross-linked polymer after the polymerization step. For example, the polymerization step may be performed in an aqueous solution, and the resulting cross-linked hydrogel polymer may be crushed after completion of the polymerization. For example, in cases, such as when the continuous belt polymerization described above is used, the cross-linked polymer is crushed after the polymerization step.

Note that when the particulate hydrogel is obtained in the polymerization process, such as in reversed-phase suspension polymerization or droplet polymerization, the gel-crushing step is preferably not performed.

Examples of the continuous kneader polymerization include a method in which the aqueous monomer solution is fed into a kneader having a lid, a polymerization initiator is added, polymerization is initiated by heating to ordinary temperature or 30°C to 70°C, and polymerization is performed while a hydrogel polymer generated as the polymerization proceeds is subdivided by a shear force due to the rotation of the kneader's blade. The polymerization vessel used in the kneader polymerization is not particularly limited but is preferably a polymerization vessel with a lid attached to the upper part so as to be able to purge the inside of the polymerization vessel with an inert gas to maintain an inert atmosphere for the polymerization reaction during polymerization.

When a double-arm kneader is used, it is preferably used by rotating the two rotary stirrers in opposite directions at the same or different speeds. The rotary stirring shaft that can be used is of any type, such as sigma type, S type, Banbury type, or fish-tail type.

The cross-linked polymer obtained in the polymerization step is subjected to the subsequent drying step in the form of particles as it is or in the form of particles obtained by gel-crushing. From the viewpoint of drying efficiency, the mass-average particle size (D50) of the particulate hydrogel is appropriately set within a range preferably from 0.1 mm to 50 mm, more preferably from 0.2 mm to 10 mm, and even more preferably from 0.5 mm to 5 mm.

The present production method may include an optional step in addition to steps (i) preparing an aqueous monomer solution and (ii) polymerization. For example, the method may include an optional step, such as drying step, pulverizing step, classifying step, granulating step, and/or post-cross-linking step, in addition to the gel-crushing step.

(iii) Drying Step

The present production method preferably includes a drying step.

The drying step is a process of drying the particulate hydrogel obtained in the polymerization step or the particulate hydrogel obtained in the gel-crushing step to a resin solids content in a desired range to obtain a dried polymer. The resin solids content in a desired range is appropriately set within a range preferably 80 mass% or more, more preferably from 85 mass% to 99 mass%, even more preferably from 90 mass% to 98 mass%, and particularly preferably from 92 mass% to 97 mass%. Here, the "resin solids content" is a value calculated from the loss on drying (mass change when 1 g of a sample is dried at 105°C for 3 hours), and is calculated from the following formula (Formula 3):

$$\text{resin solids content (mass\%)} = \text{(mass (1 g) of sample - mass (g) of sample after drying)/(mass (1 g) of sample)} \times 100 \quad (3).$$

The drying method in an embodiment of the present invention is not particularly limited, and examples include heat drying, hot-air drying, reduced-pressure drying, fluidized-bed drying, infrared drying, microwave drying, drum-dryer drying, drying by azeotropic dehydration with a hydrophobic organic solvent, and high-humidity drying using high-temperature water vapor. From the viewpoint of drying efficiency among others, hot-air drying is preferably selected, and band drying, in which hot-air drying is performed on a ventilation belt, is more preferably selected.

The drying temperature in the present step is not particularly limited; however, from the viewpoints of drying efficiency and the color tone of the cross-linked polymer, the temperature is appropriately set within a range preferably from 120°C to 200°C and more preferably from 140°C to 180°C. In addition, the drying time is appropriately set within a range preferably from 10 minutes to 300 minutes, more preferably from 20 minutes to 240 minutes, and even more preferably from 30 minutes to 200 minutes. Note that the drying temperature is typically specified by the temperature of the heating medium (e.g., in hot-air drying, the drying temperature is specified by the temperature of the hot air); however, in drying, such as microwave drying, in which the temperature cannot be specified by that of the heating medium, the drying temperature is specified by the temperature of the particulate hydrogel. In addition, the drying temperature may be constant or appropriately changed during drying.

Drying conditions other than the drying temperature and the drying time are appropriately set according to the water content of the particulate hydrogel, the amount of the particulate hydrogel to be supplied to the drying step, the target resin solids content, and the like. When band drying is selected, for example, the conditions described in WO 2006/100300 and the like are applied to an embodiment of the present invention.

(iv) Pulverizing Step and Classification Step

The present production method may include a pulverizing step and a classification step. The present step is a process of pulverizing the dried polymer obtained in the drying step (pulverizing step) and adjusting the particle size to a desired range (classification step). Note that the pulverizing step is different from the gel-crushing step in that the dried polymer to be ground has undergone the drying step.

When the present production method includes the drying step, the pulverizing step may be performed before, during, or after drying, but is preferably performed after drying. More preferably, the pulverizing step is performed after performing the gel-crushing step and the drying step.

The apparatus (grinder) used in the pulverizing step is not particularly limited, but examples include high-speed rotary grinders, such as roll mills, hammer mills, screw mills, and pin mills; vibration mills; knuckle-type grinders; and cylindrical mixers. Among these, a roll mill is preferably selected from the viewpoint of ease of controlling the particle size distribution.

The method for the particle size adjustment in the classification step is not particularly limited, but examples preferably include sieve classification using a JIS standard sieve(s) (JIS Z8801-1 (2000)) and air flow classification. Among these, the sieve classification is preferably selected from the viewpoint of classification efficiency.

5. Summary

An embodiment of the present invention may include inventions [1] to [16] below.
[1] A cross-linked polymer containing a structural unit derived from acrylamide, the cross-linked polymer having:

a content of transition metal other than iron of 40 ppb or less;
Yellowness Index (YI) after an accelerated discoloration test of 60 or less; and
a pure water retention capacity of 10 (g/g) or more,
wherein the accelerated discoloration test is performed by exposing the cross-linked polymer to an atmosphere at a temperature of 80 ± 1°C and a relative humidity of 80 ± 1% for 11 days,
Yellowness Index (YI) is a yellowness index specified in ASTM D1925 in Hunter Lab color space, and
the pure water retention capacity, a value calculated by a formula (Formula 1) set forth below, is a fluid retention capacity when 0.05 g of the cross-linked polymer is freely swollen in deionized water for 120 minutes:

pure water retention capacity (g/g) = (weight (g) of the cross-linked polymer after free swelling - weight (g) of the cross-linked polymer before free swelling)/(weight (g) of the cross-linked polymer before free swelling (1).    (1).

[2] The cross-linked polymer according to [1], further containing a structural unit derived from acrylic acid and/or an acrylate.
[3] The cross-linked polymer according to [2], wherein a degree of neutralization of an acidic functional group contained in the cross-linked polymer is 10 mol% or more.
[4] The cross-linked polymer according to any one of [1] to [3], wherein a content of the acrylamide is 500 ppm or less.
[5] The cross-linked polymer according to any one of [2] to [4], wherein a content of the acrylic acid and/or acrylate is 500 ppm or less.
[6] The cross-linked polymer according to any one of [1] to [5], wherein the transition metal other than iron is copper.
[7] The cross-linked polymer according to any one of [1] to [6], wherein a value of surface tension is 60 mN/m or more.
[8] The cross-linked polymer according to any one of [1] to [7], wherein the pure water retention capacity is from 10 to 250 (g/g).
[9] A water blocking material, containing the cross-linked polymer described in any one of [1] to [8].
[10] A method for producing a cross-linked polymer, the method including:

a step of polymerizing a monomer containing acrylamide having a content of transition metal other than iron of 40 ppb or less with a crosslinking agent to obtain a cross-linked polymer,
the cross-linked polymer having a pure water retention capacity of 10 (g/g) or more,
wherein the pure water retention capacity, a value calculated by a formula (Formula 1) set forth below, is a fluid retention capacity when 0.05 g of the cross-linked polymer is freely swollen in deionized water for 120 minutes:

pure water retention capacity (g/g) = (weight (g) of the cross-linked polymer after free swelling - weight (g) of the cross-linked polymer before free swelling)/(weight (g) of the cross-linked polymer before free swelling (1).    (1).

[11] The method for producing a cross-linked polymer according to [10], wherein the transition metal other than iron is copper.
[12] The method for producing a cross-linked polymer according to [10] or [11], wherein the polymerizing step is performed in an aqueous solution.
[13] The method for producing a cross-linked polymer according to any one of [10] to [12], wherein the polymerizing step is performed while the cross-linked polymer and/or its precursor obtained during polymerization is being crushed.
[14] The method for producing a cross-linked polymer according to any one of [10] to [13], wherein the method includes, after the polymerizing step, a step of crushing the cross-linked polymer, and a step of drying the crushed cross-linked polymer.
[15] The method for producing a cross-linked polymer according to any one of [10] to [14], wherein the monomer further contains acrylic acid and/or an acrylate.
[16] The method for producing a cross-linked polymer according to any one of [12] to [15], in which the aqueous solution has a pH from 6 to 12.

Examples

Hereinafter, an embodiment of the present invention will be described in more detail with reference to examples and comparative examples, but the present invention is not limited to only these examples.

Measurement Methods

The measurement and evaluation methods of various items performed in the examples and comparative examples will be described below.

Pure Water Retention Capacity of Cross-Linked Polymer

First, 0.050 g of a cross-linked polymer was accurately weighed and placed in a nonwoven bag (85 mm in width $\times$ 60 mm in length), and the entire nonwoven bag was submerged in a large excess (250 mL or more) of deionized water (conductivity of 1.0 mS/cm or less). After immersion (free swelling) for 120 minutes, the nonwoven fabric bag containing the water-absorbed gel was slowly pulled up from the liquid and drained for 20 seconds, and then the weight was measured. The weight of a nonwoven fabric alone without containing the cross-linked polymer was measured in the same manner and was used as a blank, and the pure water retention capacity was calculated according to the following formula (Formula 2):

pure water retention capacity (g/g) = (weight (g) of nonwoven fabric bag containing water-absorbed gel - weight (0.050 g) of cross-linked polymer - blank (g))/weight (0.050 g) of cross-linked polymer (2). (2).

3.5% NaCl Fluid Retention Capacity of Cross-Linked Polymer

First, 0.200 g of a cross-linked polymer was accurately weighed and placed in a nonwoven bag (85 mm in width $\times$ 60 mm in length), and the entire nonwoven bag was submerged in a large excess (250 mL or more) of a 3.5 mass% NaCl aqueous solution. After immersion (free swelling) for 120 minutes, the nonwoven fabric bag containing the water-absorbed gel was slowly pulled up from the liquid and drained for 20 seconds, and then the weight was measured. The weight of a nonwoven fabric alone without containing the cross-linked polymer was measured in the same manner and was used as a blank, and the pure water retention capacity was calculated according to the following formula (Formula 4):

3.5% NaCl fluid retention capacity (g/g) = (weight (g) of nonwoven fabric bag containing water-absorbed gel - weight (0.200 g) of cross-linked polymer - blank (g))/weight (0.200 g) of cross-linked polymer (4). (4).

Extractable Content of Cross-Linked Polymer

In a 1150-mL cylindrical plastic container ($\varphi$60 mm), accurately weighed 0.5 g of a cross-linked polymer, 1000 g of deionized water, and a stirring bar (50 mm) were placed. The mixture was stirred at 500 rpm for 16 hours, and the soluble content in the cross-linked polymer was extracted. The resulting extracted liquid was filtered using a filter paper (product name JIS P 3801, No. 2; thickness 0.26 mm, retention particle size 5 $\mu$m; available from ADVANTEC TOYO KAISHA, LTD.). A portion ($W_L$ (g)) of the resulting filtrate was dried to solid by reduced-pressure drying, and the weight ($W_S$ (g)) of the residual solids content was measured. The soluble content (mass%) was calculated according to the following formula (Formula 5):

soluble content (%) = (weight $W_S$ (g) of residual solids content / weight $W_L$ (g) of filtrate before reduced-pressure drying) $\times$ (weight (1000.5 g) of extract / weight (0.5 g) of cross-linked polymer) $\times$ 100 (5). (5).

Residual Monomer Content in Cross-Linked Polymer

In a 250-mL cylindrical plastic container ($\varphi$60 mm), 1 g of a cross-linked polymer, 200 g of a 0.9 mass% sodium chloride aqueous solution, and a stirring bar (35 mm) were placed. The mixture was stirred at 500 rpm for 16 hours, and the residual monomer in the cross-linked polymer was extracted. The resulting extracted liquid was filtered using one sheet of filter paper (product name JIS P 3801, No. 2; thickness 0.26 mm, retention particle size 5 $\mu$m; available from ADVANTEC TOYO KAISHA, LTD.). The resulting filtrate was passed through a filter (GL Chromatodisc available from GL Sciences Inc., aqueous 25A, pore size 0.45 $\mu$m) and subjected to high-performance liquid chromatography (HPLC). The content (unit: ppm) of the residual monomer was calculated from the resulting peak area and a prepared calibration curve.

The calibration curve used for measuring the residual monomer content in the cross-linked polymer was prepared as follows. That is, first, solutions were prepared by dissolving each of the residual monomers (acrylamide and acrylic acid) in a 0.9 mass% sodium chloride aqueous solution at concentrations of 0.025 ppm (equivalent to 5 ppm relative to the cross-linked polymer), 0.25 ppm (equivalent to 50 ppm relative to the cross-linked polymer), 1.0 ppm (equivalent to 200 ppm relative to the cross-linked polymer), 2.5 ppm (equivalent to 500 ppm relative to the cross-linked polymer), and 5 ppm (equivalent to 1000 ppm relative to the cross-linked polymer). Next, the solution was subjected to HPLC in the same manner as described above, and a calibration curve was prepared from the obtained results. The residual monomer content was calculated based on the calibration curve. When the value of the residual monomer content was 5 ppm or less as the concentration in the cross-linked polymer, it was treated as "Trace." (less than the detection limit).

The measurement conditions of HPLC of each residual monomer are as follows.

Measurement Conditions 1: Acrylamide

Eluent: 0.25 vol% phosphoric acid aqueous solution
Column: Shodex RSpak DE-413 (available from Showa Denko K.K.)
Column temperature: 50°C
Flow rate: 1 mL/min
Injection volume: 0.2 mL
Detector: UV, wavelength 210 nm

Measurement Conditions 2: Acrylic acid

Eluent: 20 vol% phosphoric acid aqueous solution
Column: Shodex RSpak DM-614 (available from Showa Denko K.K.)
Column temperature: 23 $\pm$ 2°C
Flow rate: 0.7 mL/min
Injection volume: 50 $\mu$L
Detector: UV, wavelength 210 nm

Discoloration of The Cross-Linked Polymer over Time after Accelerated Discoloration Test

Discoloration of the cross-linked polymer was evaluated using a Spectrocolorimeter SE7700 available from Nippon Denshoku Industries Co., Ltd. The measurements were performed by selecting reflectance measurement under standard C light source conditions with a 2-degree field of view using an included powder/paste sample holder (30 mm inner diameter, 12 mm height), a standard round white plate No. 2 for powder/paste as the reference, and a 30 $\Phi$ light projection pipe. The sample holder was uniformly filled with about 1.5 g of the cross-linked polymer so as to leave no gap on the bottom surface.

The sample holder filled with the cross-linked polymer was exposed for 11 days in a constant temperature and humidity chamber (available from Espec Corp. under a product name of Small Environment Tester, type SH-642) adjusted to an atmosphere of 80 $\pm$ 1°C and a relative humidity of 80 $\pm$ 1% to conduct an accelerated discoloration test. After completion of the test, the YI value (Yellowness Index, ASTM D1925) and WB (whiteness based on blue reflectance) in Hunter Lab color space were measured from the back surface of the sample holder using the spectrocolorimeter described above. These measurement values were taken as "discoloration over time (80°C, 80 RH%, 11 days)". A lower YI value indicates lower discoloration, substantially closer to white, and a higher WB value indicates lower discoloration, substantially closer to white.

Concentration of Copper in Monomer

The concentration of copper in the monomer was measured by ICP emission spectrometry in accordance with General Rules of Emission Spectrometry of JIS K0116:2014. Specifically, the content of copper in the monomer was quantified using iCAP6500 Duo (available from Thermo Fisher Scientific Inc.) and using yttrium as an internal standard. The calibration curve was prepared by diluting a general-purpose mixed standard liquid for ICP (SPEX XSTC-622B) with ultrapure water. After preparation of the calibration curve, the spectrum of copper in the ultrapure water used for dilution was measured at n = 10 to calculate the standard deviation, and 10 times the standard deviation was taken as the lower limit of quantification and 3 times the standard deviation as the lower limit of detection. As a result of the measurement, the lower limit of detection of copper was 1 ppb or less.

Concentration of Copper in Cross-Linked Polymer

To a quartz insert (available from Milestone General K.K.), 0.2 g of the cross-linked polymer and a decomposition reagent (5 mL of nitric acid 1.38 (ultrapure reagent) 60% + 0.2 mL of hydrochloric acid (ultrapure reagent)) were added, thereby obtaining a mixture. The quartz insert was placed in a TFM decomposition vessel (available from Milestone General K.K.), and a burn-in prevention reagent (1 mL of hydrogen peroxide + 4.2 mL of ultrapure water) was added into the TFM decomposition vessel. Next, the TFM decomposition vessel containing the mixture was treated under the decomposition program conditions shown in Table 1 using a microwave pretreatment apparatus (ETHOS UP, available from Milestone General K.K.), thereby obtaining a decomposition liquid.
In the table, T1 is the temperature inside the TFM decomposition vessel measured with an internal temperature sensor, and each temperature in the table is the temperature reached after the completion of each step. After step 4, the TFM decomposition vessel was cooled with a fan for 30 minutes. After the T1 temperature became lower than 40°C, the TFM decomposition vessel was opened, and two portions of the decomposition liquid were placed in a plastic vessel (ICP measuring vessel). A liquid resulting from washing the TFM decomposition vessel with ultrapure water was added to the plastic vessel, then the total weight was adjusted to 20 g with ultrapure water, thereby obtaining a preparation liquid B. Note that the time in Table 1, for example, "0:02:00" indicates 2 minutes.

[Table 1]

| Step | Time (min) | Microwave power (W) | T1 (°C) |
|------|-----------|---------------------|---------|
| 1 | 0:02:00 | 1800 | 50 |
| 2 | 0:03:00 | 0 | 30 |
| 3 | 0:25:00 | 1800 | 210 |
| 4 | 0:20:00 | 1800 | 210 |

The concentration of copper in the cross-linked polymer was measured by ICP-MS analysis according to the standard addition method described in JIS K0116:2014. Specifically, a general-purpose mixed standard liquid for ICP (SPEX XSTC-622B) was added to the preparation liquid B at different concentrations. These mixtures were then diluted with ultrapure water (specific resistance: 18 MΩ cm or more) to prepare a plurality of preparation liquids C. For these preparation liquids C, the concentration of copper in the cross-linked polymer was measured using Agilent 7700S (available from Agilent Technologies).

Example 1

An example of the present invention will be described below.
First, 241.8 parts by mass of a 40 mass% acrylamide aqueous solution (copper content in the aqueous solution < 1 ppb, copper content in acrylamide (solids content) < 2.5 ppb), 148.2 parts by mass of a 37 mass% sodium acrylate aqueous solution, and 27.8 parts by mass of deionized water were mixed. To the resulting mixed liquid, 29.7 parts by mass of a 1.5 mass% methylenebisacrylamide aqueous solution, an internal crosslinking agent, was mixed, thereby obtaining a reaction liquid. The pH of the reaction liquid was 9.6.
The resulting reaction liquid was degassed by bubbling with nitrogen gas (10 L/min) for 30 minutes. Next, the reaction liquid was supplied to a jacketed stainless double-arm kneader having two sigma-type blades. The system was then purged with nitrogen gas while the temperature was maintained at 20°C (the nitrogen gas purge was continued until the completion of the polymerization). Subsequently, 2.7 parts by mass of a 25 mass% sodium persulfate aqueous solution and 3.4 parts by mass of a 2 mass% L-ascorbic acid aqueous solution were added while the reaction liquid was stirred, the temperature increased after about 1 minute, and polymerization started. Sodium persulfate and L-ascorbic acid are polymerization initiators. The maximum temperature during the polymerization was 95°C. After the polymerization peak temperature was reached, stirring was still continued at a jacket temperature of 60°C for 30 minutes, thereby obtaining a hydrogel polymer (1).
The hydrogel polymer (1) was finely divided into particles of about 3 mm. This finely divided hydrogel polymer (1) was spread on a 50-mesh (opening size 300 μm) wire net and dried at 160°C for 130 minutes, thereby obtaining a dried polymer (1) with a water content of 4 mass%. Note that the water content was calculated from the loss on drying (mass change when 1 g of the sample was dried at 105°C for 3 hours) of the resulting dried polymer (1) as water content (mass%) = 100% - resin solids content (mass%) in the same manner as in the evaluation of the resin solids content described above.

The dried polymer (1) was pulverized using a hammer-type grinder and classified with a metal sieve (sieve opening: 20 mesh), thereby obtaining a 20 mesh-pass classified product. Subsequently, the 20 mesh-pass classified product was subjected to a fine grinding treatment with a mill-type grinder, thereby obtaining a cross-linked polymer (1) as a classified product of 60 mesh (opening 250 μm)-pass and 100 mesh (opening 150 μm)-on. The extractable content of the cross-linked polymer (1) was 11 mass%. The evaluation results of the cross-linked polymer are shown in Table 2.

Example 2

In the present example, the same reaction liquid as in Example 1 was used, and the conditions from the preparation of the reaction liquid to the start of polymerization were also the same as in Example 1. The maximum temperature during the polymerization was 96°C. After the polymerization peak temperature was reached, the reaction liquid was stirred at a jacket temperature of 60°C for 20 minutes. After stirring was temporarily stopped, 32.6 parts by mass of a 5 mass% sodium hydrogen sulfite aqueous solution was added, and after further stirring at a jacket temperature of 60°C for 10 minutes, a hydrogel polymer (2) was obtained.

The hydrogel polymer (2) was finely divided into particles of about 3 mm. This finely divided hydrogel polymer (2) was dried under the same conditions as in Example 1, thereby obtaining a dried polymer (2) with a water content of 4 mass%.

The dried polymer (2) was pulverized and classified under the same conditions as in Example 1, thereby obtaining a 20 mesh-pass classified product. Subsequently, the 20 mesh-pass classified product was subjected to a fine grinding treatment with a mill-type grinder, thereby obtaining a cross-linked polymer (2) as a classified product of 60 mesh (opening 250 μm)-pass and 100 mesh (opening 150 μm)-on. The extractable content of the cross-linked polymer (2) was 13 mass%.

The cross-linked polymer (2) was evaluated in the same manner as in Example 1. The evaluation results of the cross-linked polymer (2) are shown in Table 2.

Example 3

In the present example, 284.0 parts by mass of a 40 mass% acrylamide aqueous solution (copper content in the aqueous solution < 1 ppb, copper content in acrylamide (solids content) < 2.5 ppb), 102.6 parts by mass of a 37 mass% sodium acrylate aqueous solution, and 30.1 parts by mass of deionized water were mixed. To the resulting mixed liquid, 30.6 parts by mass of a 1.5 mass% methylenebisacrylamide aqueous solution, an internal crosslinking agent, was mixed, thereby obtaining a reaction liquid. The pH of the reaction liquid was 9.3.

The process up to the start of polymerization was performed under the same conditions as in Example 1. The maximum temperature during the polymerization was 98°C. After the polymerization peak temperature was reached, the reaction liquid was stirred at a jacket temperature of 60°C for 20 minutes, and the stirring was temporarily stopped. Then, 32.6 parts by mass of a 5 mass% sodium hydrogen sulfite aqueous solution was added, and after further stirring at a jacket temperature of 60°C for 10 minutes, a hydrogel polymer (3) was obtained.

The hydrogel polymer (3) was finely divided into particles of about 3 mm. This finely divided hydrogel polymer (3) was dried under the same conditions as in Example 1, thereby obtaining a dried polymer (3) with a water content of 4 mass%.

The dried polymer (3) was pulverized and classified under the same conditions as in Example 1, thereby obtaining a 20 mesh-pass classified product. Subsequently, the 20 mesh-pass classified product was subjected to a fine grinding treatment with a mill-type grinder, thereby obtaining a cross-linked polymer (3) as a classified product of 60 mesh (opening 250 μm)-pass and 100 mesh (opening 150 μm)-on. The extractable content of the cross-linked polymer (3) was 12 mass%.

The cross-linked polymer (3) was evaluated in the same manner as in Example 1. The evaluation results of the cross-linked polymer (3) are shown in Table 2.

Example 4

In the present example, 330.0 parts by mass of a 40 mass% acrylamide aqueous solution (copper content in the aqueous solution < 1 ppb, copper content in acrylamide (solids content) < 2.5 ppb), 52.9 parts by mass of a 37 mass% sodium acrylate aqueous solution, and 32.7 parts by mass of deionized water were mixed. To the resulting mixed liquid, 31.6 parts by mass of a 1.5 mass% methylenebisacrylamide aqueous solution, an internal crosslinking agent, was mixed, thereby obtaining a reaction liquid. The pH of the reaction liquid was 8.7.

The process up to the start of polymerization was performed under the same conditions as in Example 1. The maximum temperature during the polymerization was 99°C. After the polymerization peak temperature was reached, the reaction liquid was stirred at a jacket temperature of 60°C for 20 minutes, and the stirring was temporarily stopped. Then, 32.6 parts by mass of a 5 mass% sodium hydrogen sulfite aqueous solution was added, and after further stirring at a jacket temperature of 60°C for 10 minutes, a hydrogel polymer (4) was obtained.

The hydrogel polymer (4) was finely divided into particles of about 3 mm. This finely divided hydrogel polymer (4) was dried under the same conditions as in Example 1, thereby obtaining a dried polymer (4) with a water content of 4 mass%.

The dried polymer (4) was pulverized and classified under the same conditions as in Example 1, thereby obtaining a 20 mesh-pass classified product. Subsequently, the 20 mesh-pass classified product was subjected to a fine grinding treatment with a mill-type grinder, thereby obtaining a cross-linked polymer (4) as a classified product of 60 mesh (opening 250 $\mu$m)-pass and 100 mesh (opening 150 $\mu$m)-on. The extractable content of the cross-linked polymer (4) was 14 mass%.

The cross-linked polymer (4) was evaluated in the same manner as in Example 1. The evaluation results of the cross-linked polymer (4) are shown in Table 2.

Example 5

In the present example, 235.9 parts by mass of a 40 mass% acrylamide aqueous solution (copper content in the aqueous solution < 1 ppb, copper content in acrylamide (solids content) < 2.5 ppb), 144.7 parts by mass of a 37 mass% sodium acrylate aqueous solution, and 0.3 parts by mass of deionized water were mixed. To the resulting mixed liquid, 66.9 parts by mass of a 1.5 mass% methylenebisacrylamide aqueous solution, an internal crosslinking agent, was mixed, thereby obtaining a reaction liquid. The pH of the reaction liquid was 9.5.

The process up to the start of polymerization was performed under the same conditions as in Example 1. The maximum temperature during the polymerization was 92°C. After the polymerization peak temperature was reached, the reaction liquid was stirred at a jacket temperature of 60°C for 20 minutes, and the stirring was temporarily stopped. Then, 32.6 parts by mass of a 5 mass% sodium hydrogen sulfite aqueous solution was added, and after further stirring at a jacket temperature of 60°C for 10 minutes, a hydrogel polymer (5) was obtained.

The hydrogel polymer (5) was finely divided into particles of about 2 mm. This finely divided hydrogel polymer (5) was dried under the same conditions as in Example 1, thereby obtaining a dried polymer (5) with a water content of 4 mass%.

The dried polymer (5) was pulverized and classified under the same conditions as in Example 1, thereby obtaining a 20 mesh-pass classified product. Subsequently, the 20 mesh-pass classified product was subjected to a fine grinding treatment with a mill-type grinder, thereby obtaining a cross-linked polymer (5) as a classified product of 60 mesh (opening 250 $\mu$m)-pass and 100 mesh (opening 150 $\mu$m)-on. The extractable content of the cross-linked polymer (5) was 8 mass%.

The cross-linked polymer (5) was evaluated in the same manner as in Example 1. The evaluation results of the cross-linked polymer (5) are shown in Table 2.

Comparative Example 1

A hydrogel polymer (C1) was obtained by performing the same operation as in Example 1 except for using a 40 mass% acrylamide aqueous solution (copper content in acrylamide (solids content) was 215 ppb). The hydrogel polymer (C1) was finely divided into particles of about 3 mm. This finely divided hydrogel polymer (C1) was dried under the same conditions as in Example 1, thereby obtaining a dried polymer (C1) with a water content of 4 mass%.

The dried polymer (C1) was pulverized and classified under the same conditions as in Example 1, thereby obtaining a 20 mesh-pass classified product. Subsequently, the 20 mesh-pass classified product was subjected to a fine grinding treatment with a mill-type grinder, thereby obtaining a cross-linked polymer (C1) as a classified product of 60 mesh (opening 250 $\mu$m)-pass and 100 mesh (opening 150 $\mu$m)-on. The extractable content of the cross-linked polymer (C1) was 10 mass%. The cross-linked polymer (C1) was evaluated in the same manner as in Example 1. The evaluation results of the cross-linked polymer (C1) are shown in Table 2.

Comparative Example 2

A hydrogel polymer (C2) was obtained by performing the same operation as in Comparative Example 1 except for using a 40 mass% acrylamide aqueous solution (copper content in acrylamide (solids content) was 103 ppb). The hydrogel polymer (C2) was finely divided into particles of about 3 mm. This finely divided hydrogel polymer (C2) was dried under the same conditions as in Example 1, thereby obtaining a dried polymer (C2) with a water content of 4 mass%.

The dried polymer (C2) was pulverized and classified under the same conditions as in Example 1, thereby obtaining a 20 mesh-pass classified product. Subsequently, the 20 mesh-pass classified product was subjected to a fine grinding treatment with a mill-type grinder, thereby obtaining a cross-linked polymer (C2) as a classified product of 60 mesh

(opening 250 $\mu$m)-pass and 100 mesh (opening 150 $\mu$m)-on. The extractable content of the cross-linked polymer (C2) was 12 mass%. The cross-linked polymer (C2) was evaluated in the same manner as in Example 1. The evaluation results of the cross-linked polymer (C2) are shown in Table 2.

[Table 2]

| | Cross-linked polymer | Monomer composition (Acrylamide/ Na acrylate) | Copper content in acrylamide | Copper content in cross-linked polymer | Pure water retention capacity | 3.5% NaCl fluid retention capacity | Content of residual acrylamide in cross-linked polymer | Content of residual acrylic acid in cross-linked polymer | Surface tension | Evaluation after accelerated discoloration Test | |
|---|---|---|---|---|---|---|---|---|---|---|---|
| | | | | | | | | | | YI | WB |
| | | mol% | ppb | ppb | g/g | g/g | ppm | ppm | mN/m | | |
| Example 1 | Cross-linked polymer (1) | 70/30 | < 2.5 | 21 | 203 | 29 | 10 | 489 | 72 | 52 | 27 |
| Example 2 | Cross-linked polymer (2) | 70/30 | < 2.5 | 17 | 184 | 29 | < 5 | 283 | 73 | 48 | 31 |
| Example 3 | Cross-linked polymer (3) | 80/20 | < 2.5 | 22 | 165 | 23 | 82 | 170 | 72 | 52 | 25 |
| Example 4 | Cross-linked polymer (4) | 90/10 | < 2.5 | 24 | 140 | 21 | 134 | 100 | 71 | 53 | 33 |
| Example 5 | Cross-linked polymer (5) | 70/30 | < 2.5 | 20 | 114 | 23 | < 5 | 261 | 73 | 40 | 31 |
| Comparative Example 1 | Cross-linked polymer (C1) | 70/30 | 215 | 150 | 200 | 30 | 36 | 614 | 72 | 68 | 22 |
| Comparative Example 2 | Cross-linked polymer (C2) | 70/30 | 103 | 86 | 203 | 30 | 40 | 623 | 73 | 61 | 38 |

20

EP 4 714 989 A1

Discussion

(1) Results of Examples 1 to 5 show that the cross-linked polymers according to an embodiment of the present invention containing 40 ppb or less of the transition metal other than iron exhibit effects of having low residual monomer content and being excellent in reducing discoloration after long-term storage or long-term use. In addition, the results of the pure water retention capacity and the 3.5% NaCl fluid retention capacity also show that the cross-linked polymers exhibit the above effects without adversely affecting basic water absorption physical properties, such as the retention capacity.

(2) The cross-linked polymers obtained in Comparative Examples 1 and 2 are found to be cross-linked polymers with higher residual monomer content than those of Examples and poor discoloration properties after long-term storage or long-term use. That is, even cross-linked polymers obtained by polymerization of a monomer containing acrylamide and a crosslinking agent but containing more than 40 ppb of the transition metal other than iron in the cross-linked polymer are found to be unable to resolve the object of the present invention.

Industrial Applicability

The cross-linked polymer and the method for producing the cross-linked polymer according to an embodiment of the present invention provide low monomer content after polymerization and can reduce discoloration and residual monomer content even after long-term storage or use. Thus, these can be suitably used in water blocking materials and the like, which require high quality and reduced discoloration.

**Claims**

1. A cross-linked polymer, comprising a structural unit derived from acrylamide, the cross-linked polymer having:

   a content of transition metal other than iron of 40 ppb or less;
   Yellowness Index (YI) after an accelerated discoloration test of 60 or less; and
   a pure water retention capacity of 10 (g/g) or more,
   wherein the accelerated discoloration test is performed by exposing the cross-linked polymer to an atmosphere at a temperature of 80 $\pm$ 1°C and a relative humidity of 80 $\pm$ 1% for 11 days,
   Yellowness Index (YI) is a yellowness index specified in ASTM D1925 in Hunter Lab color space, and
   the pure water retention capacity, a value calculated by a formula (Formula 1) set forth below, is a fluid retention capacity when 0.05 g of the cross-linked polymer is freely swollen in deionized water for 120 minutes:

   pure water retention capacity (g/g) = (weight (g) of the cross-linked polymer after free swelling - weight (g) of the cross-linked polymer before free swelling)/(weight (g) of the cross-linked polymer before free swelling) (1).     (1).

2. The cross-linked polymer according to claim 1, further comprising a structural unit derived from acrylic acid and/or an acrylate.

3. The cross-linked polymer according to claim 2, wherein a degree of neutralization of an acidic functional group contained in the cross-linked polymer is 10 mol% or more.

4. The cross-linked polymer according to any one of claims 1 to 3, wherein a content of the acrylamide is 500 ppm or less.

5. The cross-linked polymer according to any one of claims 2 to 4, wherein a content of the acrylic acid and/or acrylate is 500 ppm or less.

6. The cross-linked polymer according to any one of claims 1 to 5, wherein the transition metal other than iron is copper.

7. The cross-linked polymer according to any one of claims 1 to 6, wherein a value of surface tension is 60 mN/m or more.

8. The cross-linked polymer according to any one of claims 1 to 7, wherein the pure water retention capacity is from 10 to 250 (g/g).

9. A water blocking material, comprising the cross-linked polymer described in any one of claims 1 to 8.

10. A method for producing a cross-linked polymer, the method comprising:

a step of polymerizing a monomer comprising acrylamide having a content of transition metal other than iron of 40 ppb or less with a crosslinking agent to obtain a cross-linked polymer, the cross-linked polymer having a pure water retention capacity of 10 (g/g) or more,
wherein the pure water retention capacity, a value calculated by a formula (Formula 1) set forth below, is a fluid retention capacity when 0.05 g of the cross-linked polymer is freely swollen in deionized water for 120 minutes:

pure water retention capacity (g/g) = (weight (g) of the cross-linked polymer after free swelling - weight (g) of the cross-linked polymer before free swelling)/(weight (g) of the cross-linked polymer before free swelling) (1).            (1).

11. The method for producing a cross-linked polymer according to claim 10, wherein the transition metal other than iron is copper.

12. The method for producing a cross-linked polymer according to claim 10 or 11, wherein the polymerizing step is performed in an aqueous solution.

13. The method for producing a cross-linked polymer according to any one of claims 10 to 12, wherein the polymerizing step is performed while the cross-linked polymer and/or a precursor thereof obtained during polymerization is being crushed.

14. The method for producing a cross-linked polymer according to any one of claims 10 to 13, wherein the method comprises, after the polymerizing step, a step of crushing the cross-linked polymer, and a step of drying the crushed cross-linked polymer.

15. The method for producing a cross-linked polymer according to any one of claims 10 to 14, wherein the monomer further comprises acrylic acid and/or an acrylate.

16. The method for producing a cross-linked polymer according to any one of claims 12 to 15, wherein the aqueous solution has a pH from 6 to 12.

## INTERNATIONAL SEARCH REPORT

| International application No. |
|---|
| **PCT/JP2024/017782** |

### A. CLASSIFICATION OF SUBJECT MATTER

*C08F 20/56*(2006.01)i
FI: C08F20/56

According to International Patent Classification (IPC) or to both national classification and IPC

### B. FIELDS SEARCHED

Minimum documentation searched (classification system followed by classification symbols)

C08F

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2007-502879 A (BASF AKTIENGESELLSCHAFT) 15 February 2007 (2007-02-15) claims, paragraph [0051], example 27 | 1-16 |
| Y | WO 2022/085755 A1 (NIPPON SHOKUBAI CO., LTD.) 28 April 2022 (2022-04-28) paragraph [0172] | 1-16 |
| Y | WO 2020/209057 A1 (NIPPON SHOKUBAI CO., LTD.) 15 October 2020 (2020-10-15) paragraph [0078] | 1-16 |
| Y | JP 9-227478 A (MITSUI TOATSU CHEMICALS, INC.) 02 September 1997 (1997-09-02) claims, paragraph [0063] | 1-16 |
| Y | JP 8-157439 A (MITSUI TOATSU CHEMICALS, INC.) 18 June 1996 (1996-06-18) claims, paragraph [0035] | 1-16 |
| Y | JP 57-7453 A (MITSUI TOATSU CHEMICALS, INC.) 14 January 1982 (1982-01-14) claims, p. 6, upper left column | 1-16 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 July 2024** | **06 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/017782** |

**C.** **DOCUMENTS CONSIDERED TO BE RELEVANT**

| Category* | Citation of document, with indication, where appropriate, of the relevant passages | Relevant to claim No. |
| --- | --- | --- |
| Y | JP 57-120609 A (HITACHI METALS, LTD.) 27 July 1982 (1982-07-27)<br>p. 2, upper left column | 1-16 |
| Y | 大沢善次郎,松崎啓. オキサニリドによるポリプロピレンの銅接触熱酸化分解の抑制. 工業化学雑誌. 1967, vol. 70, no. 12, pp. 2364-2367, (OSAWA, Zenjiro, MATSUZAKI, Kei. Inhibition of the Copper-catalysed Thermal Oxidative Degradation of Polypropylene by Oxanilide. The Journal of the Society of Chemical Industry, Japan.)<br>2364 | 1-16 |
| A | JP 61-246212 A (AMERICAN CYANAMID COMPANY) 01 November 1986 (1986-11-01)<br>entire text | 1-16 |

Form PCT/ISA/210 (second sheet) (July 2022)

## INTERNATIONAL SEARCH REPORT
### Information on patent family members

International application No.

**PCT/JP2024/017782**

| Patent document cited in search report | | | Publication date (day/month/year) | Patent family member(s) | | | Publication date (day/month/year) |
|---|---|---|---|---|---|---|---|
| JP | 2007-502879 | A | 15 February 2007 | US | 2006/0229369 | A1 | |
| | | | | claims, paragraph [0063], example 27 | | | |
| | | | | EP | 1658314 | A1 | |
| | | | | KR | 10-2006-0081700 | A | |
| | | | | CN | 1839159 | A | |
| WO | 2022/085755 | A1 | 28 April 2022 | (Family: none) | | | |
| WO | 2020/209057 | A1 | 15 October 2020 | (Family: none) | | | |
| JP | 9-227478 | A | 02 September 1997 | (Family: none) | | | |
| JP | 8-157439 | A | 18 June 1996 | (Family: none) | | | |
| JP | 57-7453 | A | 14 January 1982 | (Family: none) | | | |
| JP | 57-120609 | A | 27 July 1982 | (Family: none) | | | |
| JP | 61-246212 | A | 01 November 1986 | US | 4551266 | A | |
| | | | | entire text | | | |
| | | | | EP | 65078 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S62039604 A
- JP 2007502879 T
- JP 2013538913 T
- US 4893999 A
- US 6987151 B
- US 6241928 B
- WO 2011126079 A
- WO 2006100300 A